# EUROPEAN PATENT SPECIFICATION

(11) **EP 4 439 717 B1**
(45) Date of publication and mention of the grant of the patent: **28.10.2026**
(21) Application number: 23863415.8
(22) Date of filing: 01.09.2023
(51) Int. Cl.: H01M 4/36, H01M 4/48, H01M 4/62, H01M 10/052, H01M 4/02, H01M 10/0525, H01M 4/38, H01M 4/58

(54) **NEGATIVE ACTIVE MATERIAL, NEGATIVE ELECTRODE COMPRISING SAME, SECONDARY BATTERY COMPRISING SAME, AND METHOD FOR PRODUCING NEGATIVE ACTIVE MATERIAL**
NEGATIVES AKTIVMATERIAL, NEGATIVE ELEKTRODE DAMIT, SEKUNDÄRBATTERIE DAMIT UND VERFAHREN ZUR HERSTELLUNG EINES NEGATIVEN AKTIVMATERIALS
MATÉRIAU ACTIF NÉGATIF, ÉLECTRODE NÉGATIVE LE COMPRENANT, BATTERIE SECONDAIRE LE COMPRENANT, ET SON PROCÉDÉ DE PRODUCTION DE MATÉRIAU ACTIF NÉGATIF

(30) Priority: 05.09.2022 KR 20220111916; 31.08.2023 KR 20230115379
(43) Date of publication of application: 02.10.2024
(73) Proprietor: LG Energy Solution, Ltd., Seoul 07335 (KR)
(72) Inventor: CHOI, Junghyun, Daejeon 34122 (KR); PARK, Semi, Daejeon 34122 (KR); PARK, Heeyeon, Daejeon 34122 (KR); SHIN, Sun Young, Daejeon 34122 (KR); OH, Ilgeun, Daejeon 34122 (KR); LEE, Yong Ju, Daejeon 34122 (KR)
(74) Representative: Hoffmann Eitle
(86) International application number: PCT/KR2023/013057
(87) International publication number: WO 2024/053939

(56) References cited:
- CN-A- 109 638 254
- CN-A- 113 381 021
- KR-A- 20220 092 556
- KR-A- 20220 092 556
- KR-A- 20220 107 281
- US-A1- 2018 175 377
- US-A1- 2022 231 282

## Description

### [Technical Field]

The present invention relates to a negative electrode active material, a negative electrode including the same, a secondary battery including the negative electrode, and a method for manufacturing a negative electrode active material.

This application claims priority to and the benefit of Korean Patent Application No. 10-2022-0111916 filed in the Korean Intellectual Property Office on September 5, 2022, and Korean Patent Application No. 10-2023-0115379 filed in the Korean Intellectual Property Office on August 31, 2023.

### [Background Art]

Recently, with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolyte solution, an organic solvent, and the like. In addition, the positive electrode and the negative electrode may be formed on current collectors with active material layers each including a positive electrode active material and a negative electrode active material. In general, for the positive electrode, a lithium-containing metal oxide such as LiCoO₂ and LiMn₂O₄ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.

On the other hand, among the silicon-based active materials, a silicon-based oxide, specifically, a silicon-based oxide represented by SiOₓ (0<x<2) has an advantage in that the degree of volume expansion/contraction during the charging and discharging is lower as compared with other silicon-based active materials such as silicon (Si). However, the silicon-based oxide still has a disadvantage in that the initial efficiency is lowered due to the presence of irreversible capacity.

In this regard, studies have been conducted to reduce the irreversible capacity and to improve the initial efficiency by doping or intercalating metals such as Li, Al, and Mg into silicon-based oxides. However, a negative electrode slurry including a metal-doped silicon-based oxide as a negative electrode active material has a problem in that the metal oxide formed by doping metal reacts with moisture to increase pH of the negative electrode slurry and to change the viscosity. Accordingly, the state of the manufactured negative electrode is poor and the charging and discharging efficiency of the negative electrode is lowered.

Accordingly, there is a need to develop a negative electrode active material capable of improving phase stability of a negative electrode slurry including a silicon-based oxide and improving charging and discharging efficiency of a negative electrode manufactured from the slurry. Document KR 2022 0092556 A discloses a negative electrode active material comprising silicon-based particle and lithium; a carbon layer provided on at least a portion of a surface of the silicon-based particle; a composite oxide coating layer comprising Li, Al and P. Document CN 109 638 254 A discloses a negative electrode active material comprising: a silicon-based particle; a carbon layer provided on at least a portion of a surface of the silicon-based particle; wherein an oxide comprises one or more selected from the group consisting of Zr, Al, and Ti is at an interface between the silicon-based particle and the carbon layer.

### [Detailed Description of the Invention]

### [Technical Problem]

The present invention relates to a negative electrode active material, a negative electrode including the same, a secondary battery including the negative electrode, and a method for manufacturing a negative electrode active material.

### [Technical Solution]

An exemplary embodiment of the present invention provides a negative electrode active material including a silicon-based particle including SiOₓ (0<x<2) and a Li compound; a carbon layer provided on at least a portion of a surface of the silicon-based particle; and a surface layer provided on at least a portion of a surface of the carbon layer and including Li, Al and P, wherein an oxide including one or more selected from the group consisting of Zr, B, Al, Zn, W and Ti is provided in an interface between the silicon-based particle and the carbon layer.

Another exemplary embodiment of the present invention provides a negative electrode including the negative electrode active material.

Still another exemplary embodiment of the present invention provides a secondary battery including the negative electrode.

Yet another exemplary embodiment of the present invention provides a method for manufacturing a negative electrode active material according to an exemplary embodiment of the present invention, the method including: manufacturing a preliminary silicon-based particle including SiOₓ (0<x<2); mixing the preliminary silicon-based particle and an oxide including one or more selected from the group consisting of Zr, B, Al, Zn, W and Ti, or depositing the oxide on the preliminary silicon-based particle to provide a surface of the preliminary silicon-based particle with the oxide; providing at least a portion of the surface of the preliminary silicon-based particle with a carbon layer; mixing the preliminary silicon-based particle provided with the carbon layer and a Li precursor, and heat-treating the mixture to manufacture a silicon-based particle; and mixing the silicon-based particle and one or more selected from the group consisting of an Al precursor, a P precursor, and a precursor including Al and P to provide at least a portion of a surface of the carbon layer with a surface layer.

### [Advantageous Effects]

The negative electrode active material according to an exemplary embodiment of the present invention includes the surface layer including Li, Al, and P, and the oxide including one or more selected from the group consisting of Zr, B, Al, Zn, W and Ti is provided in the interface between the silicon-based particle and the carbon layer. The negative electrode active material includes both the surface layer and the oxide at the same time. Thereby, it is possible to lower the reactivity of silicates that are highly reactive with water or alkali and to easily block contact with the outside, thereby improving the aqueous processability of the slurry.

Specifically, during a process of forming the surface layer, lithium by-products included in the silicon-based particles can be effectively removed, and the formed surface layer effectively covers unreacted lithium by-products. Thereby, it is possible to prevent a phenomenon that lithium by-products or silicates in the silicon-based particles react with moisture of the slurry to deteriorate physical properties of the slurry. In addition, since the surface layer includes Li, the lithium diffusion resistance on the surface of the negative electrode active material is lowered, which has the effect of improving discharge rate capability.

Further, the oxide including one or more selected from the group consisting of Zr, B, Al, Zn, W, and Ti is included in the interface between the silicon-based particle and the carbon layer, so that the reactivity of the highly reactive silicate in the silicon-based particle can be lowered and the contact with the outside can be blocked, which has the effect of significantly improving the aqueous processability.

Accordingly, the negative electrode including the negative electrode active material according to an exemplary embodiment of the present invention, and the secondary battery including the negative electrode have effects of improving the discharge capacity, initial efficiency, resistance performance and/or life characteristics of the battery.

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the negative electrode active material can be confirmed through ICP analysis, and the ICP analysis may be performed using an inductively coupled plasma atomic emission spectrometer (ICPAES, Perkin-Elmer 7300).

In the present specification, the average particle diameter (D₅₀) may be defined as a particle diameter corresponding to 50% of the cumulative volume in the particle size distribution curve of the particles (graph curve of the particle size distribution). The average particle diameter (D₅₀) may be measured using, for example, a laser diffraction method. In the laser diffraction method, in general, particle diameters ranging from a submicron range to several millimeters can be measured, and results with high reproducibility and high resolvability can be obtained.

Hereinafter, preferred embodiments of the present invention will be described in detail. However, it should be understood that the embodiments of the present invention may be modified in various forms and the scope of the present invention is set out in the appended claims.

### <Negative electrode active material>

An exemplary embodiment of the present invention provides a negative electrode active material including a silicon-based particle including SiOₓ (0<x<2) and a Li compound; a carbon layer provided on at least a portion of a surface of the silicon-based particle; and a surface layer including Li, Al and P provided on at least a portion of a surface of the carbon layer, wherein an oxide including one or more selected from the group consisting of Zr, B, Al, Zn, W and Ti is provided in an interface between the silicon-based particle and the carbon layer.

The negative electrode active material according to an exemplary embodiment of the present invention includes a silicon-based particle. The silicon-based particle includes SiOₓ(0<x<2) and a Li compound.

The SiOₓ (0<x<2) may correspond to a matrix in the silicon-based particle. The SiOₓ(0<x<2) may be a form of including Si and/or SiO₂, and the Si may form a phase. That is, x corresponds to a ratio of the number of 0 to Si included in the SiOₓ(0<x<2). When the silicon-based particle includes the SiOₓ(0<x<2), a discharge capacity of a secondary battery can be improved.

The Li compound may correspond to a dopant in the silicon-based particle. The Li compound may be present in a form of at least one of a lithium atom, lithium silicate, lithium silicide or a lithium oxide in the silicon-based particle. When the silicon-based particle includes a Li compound, the initial efficiency is improved.

The Li compound may be distributed on the surface and/or in the inside of the silicon-based particle in the form of being doped to the silicon-based particle. The Li compound may be distributed on the surface and/or in the inside of the silicon-based particle to serve to control volume expansion/contraction of the silicon-based particle to an appropriate level and to prevent damage to the active material. In addition, the Li compound may be contained, in terms of lowering a ratio of an irreversible phase (for example, SiO₂) of silicon-based oxide particle to increase the efficiency of the active material.

In an exemplary embodiment of the present invention, the Li compound may be present in a form of lithium silicate. The lithium silicate is represented by LiₐSi_{b}O_{c}(2≤a≤4, 0<b≤2, 2≤c≤5) and may be divided into crystalline lithium silicate and amorphous lithium silicate. The crystalline lithium silicate may be present in the silicon-based particles in a form of at least one lithium silicate selected from the group consisting of Li₂SiO₃, Li₄SiO₄ and Li₂Si₂O₅, and the amorphous lithium silicate may have a complex form of LiₐSi_{b}O_{c}(2≤a≤4, 0<b≤2, 2≤c≤5) . However, the present invention is not limited thereto.

In an exemplary embodiment of the present invention, a Li element may be included in an amount of 0.1 part by weight to 40 parts by weight, or 0.1 part by weight to 25 parts by weight, on the basis of 100 parts by weight of the total of the negative electrode active material. Specifically, Li may be included in an amount of 1 part by weight to 25 parts by weight, and more specifically, 2 parts by weight to 20 parts by weight. As the Li content increases, the initial efficiency increases, but the discharge capacity decreases. Therefore, when the above range is satisfied, appropriate discharge capacity and initial efficiency can be implemented.

The content of the Li element can be confirmed through ICP analysis. Specifically, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of an element to be analyzed. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the element content of the prepared negative electrode active material can be analyzed.

In an exemplary embodiment of the present invention, the silicon-based particle may include a further metal atom. The metal atom may be present in the form of at least one of a metal atom, a metal silicate, a metal silicide and a metal oxide in the silicon-based particle. The metal atom may include at least one selected from the group consisting of Mg, Li, Al and Ca. Accordingly, initial efficiency of the negative electrode active material may be improved.

In an exemplary embodiment of the present invention, the silicon-based particle is provided with a carbon layer on at least a portion of a surface thereof. In this case, the carbon layer may be coated on at least a portion of the surface, i.e., may be partially coated on the surface of the particle, or may be coated on the entire surface of the particle. Conductivity is imparted to the negative electrode active material by the carbon layer, so that the initial efficiency, life characteristics, and battery capacity characteristics of a secondary battery can be improved.

In an exemplary embodiment of the present invention, the carbon layer includes amorphous carbon. Further, the carbon layer may further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one material selected from the group consisting of tar, pitch, and other organic materials, or may be a carbon-based material formed by using a hydrocarbon as a source of chemical vapor deposition.

The carbide of the other organic materials may be a carbide of an organic material selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 part by weight to 50 parts by weight, 0.1 part by weight to 30 parts by weight, or 0.1 part by weight to 20 parts by weight on the basis of 100 parts by weight of the total of the negative electrode active material. More specifically, the carbon layer may be included in an amount of 0.5 part by weight to 15 parts by weight, 1 part by weight to 10 parts by weight, or 1 part by weight to 5 parts by weight. When the above range is satisfied, reduction in capacity and efficiency of the negative electrode active material can be prevented.

In an exemplary embodiment of the present invention, a thickness of the carbon layer may be 1 nm to 500 nm, and specifically 5 nm to 300 nm. When the above range is satisfied, the conductivity of the negative electrode active material is improved, the change in volume of the negative electrode active material is easily suppressed, and the side reaction between the electrolyte solution and the negative electrode active material is suppressed, thereby improving the initial efficiency and/or life of the battery.

Specifically, the carbon layer may be formed by chemical vapor deposition (CVD) using at least one hydrocarbon gas selected from the group consisting of methane, ethane and acetylene.

In the present invention, the crystallinity of the carbon layer can be confirmed by calculating the D/G band ratio according to Raman spectroscopy. Specifically, measurements can be made using a Renishaw 2000 Raman microscope system and 532 nm laser excitation, and using a 100x optical lens with a low laser power density and an exposure time of 30 seconds in order to avoid a laser heat effect. In order to reduce a deviation depending on position, a total of 25 points can be determined for a region of 5 µm x 5 um, and fitted using the Lorentzian function. Thereafter, average values of the D band and G band can be calculated.

The negative electrode active material according to an exemplary embodiment of the present invention includes a surface layer provided on at least a portion of a surface of the carbon layer and including Li, Al, and P.

Specifically, the surface layer may be present in a form of covering at least a portion on the silicon-based particle having a carbon layer on a surface. That is, the surface layer may be partially coated on a surface of the particle, or may be coated on the entire surface of the particle. A shape of the surface layer may include an island type or a thin film type, but the shape of the surface layer is not limited thereto.

The surface layer may be provided on at least a portion on the carbon layer. That is, the surface layer may be coated adjacent to the carbon layer, and may be provided in the form of the surface layer-the carbon layer-the particle including SiOₓ (0<x<2) and a Li compound. The surface layer may substantially or completely cover the carbon layer or may partially cover the carbon layer.

Additionally, the surface layer may be further provided on a region, in which the carbon layer is not provided, of the surface of the silicon-based particle. That is, the surface layer may be coated adjacent to a surface of the silicon-based particle that is not coated with the carbon layer, and may be provided in the form of the surface layer-the silicon-based particle.

In an exemplary embodiment of the present invention, the surface layer includes Li, Al and P.

In an exemplary embodiment of the present invention, the surface layer may include Li, Al, P and O elements.

In an exemplary embodiment of the present invention, the Al element included in the negative electrode active material may be included in an amount of 0.05 part by weight or more and 0.5 part by weight or less on the basis of 100 parts by weight of a total of the negative electrode active material. Specifically, Al may be included in an amount of 0.1 part by weight or more and 0.4 part by weight or less, 0.12 part by weight or more and 0.35 part by weight or less, or 0.15 part by weight or more and 0.3 part by weight or less. The lower limit of the content of Al is 0.05 part by weight, 0.1 part by weight, 0.12 part by weight, or 0.15 part by weight, and the upper limit thereof is 0.5 part by weight, 0.4 part by weight, 0.35 part by weight or 0.3 part by weight.

In an exemplary embodiment of the present invention, the P element included in the negative electrode active material may be included in an amount of 0.05 part by weight or more and 2 parts by weight or less on the basis of 100 parts by weight of the total of the negative electrode active material. Specifically, P may be included in an amount of 0.1 part by weight or more and 1.5 parts by weight or less, 0.15 part by weight or more and 1.2 parts by weight or less, or 0.3 part by weight or more and 1.2 parts by weight or less. The lower limit of the content of P is 0.05 part by weight, 0.1 part by weight, 0.15 part by weight, 0.2 part by weight, 0.25 part by weight, 0.3 part by weight, 0.35 part by weight, 0.4 part by weight, 0.45 part by weight or 0.5 part by weight, and the upper limit thereof is 2 parts by weight, 1.5 parts by weight, 1.2 parts by weight or 1 part by weight.

In an exemplary embodiment of the present invention, the Li element included in the negative electrode active material may be included in an amount of 0.05 part by weight or more and 2 parts by weight or less on the basis of 100 parts by weight of the total of the negative electrode active material. Specifically, Li may be included in an amount of 0.1 part by weight or more and 1.5 parts by weight or less, or 0.15 part by weight or more and 1 part by weight or less. The lower limit of the content of Li included in the surface layer is 0.05 part by weight, 0.1 part by weight, 0.15 part by weight, 0.2 part by weight, 0.25 part by weight, 0.3 part by weight, 0.35 part by weight, 0.4 part by weight, 0.45 part by weight or 0.5 part by weight, and the upper limit thereof is 2 parts by weight, 1.5 parts by weight, 1.2 parts by weight or 1 part by weight.

In an exemplary embodiment of the present invention, the surface layer may include a phase of Li_{y}Al_{z}P_{w}Oᵥ (0<y≤10, 0<z≤10, 0<w≤10, 0<v≤10). The y, z, w and v each represent a ratio of the number of each atom.

In an exemplary embodiment of the present invention, the surface layer may include one or more selected from the group consisting of aluminum oxide, phosphorus oxide, lithium oxide, aluminum phosphate, lithium salt, lithium phosphate, and lithium aluminate. In one example, the phase of Li_{y}Al_{z}P_{w}Oᵥ may include a mixture or a compound formed from Li₃PO₄, AlPO₄, Al(PO₃)₃, LiAlO₂ or the like, but is not limited thereto.

When the surface layer including the components as described above is provided, it is possible to prevent a phenomenon that the Li compound included in the silicon-based particle reacts with moisture of slurry to lower viscosity of the slurry, which has the effect of improving the stability of the electrode state and/or charging and discharging capacity.

In an exemplary embodiment of the present invention, the surface layer may include an amorphous phase. In one example, the surface layer may be an amorphous phase. In one example, when performing an X-ray diffraction analysis on the negative electrode active material according to an exemplary embodiment of the present invention, a crystalline peak originating from the surface layer may not appear.

In an exemplary embodiment of the present invention, the surface layer may further include one or more selected from the group consisting of Li₂O, LiOH and Li₂CO₃. In general, during the process of doping lithium into silicon-based particles, the remaining materials may be exposed to moisture or air to form lithium by-products such as Li₂O, LiOH and Li₂CO₃. Therefore, the surface layer may be in a form including one or more selected from the group consisting of Li₂O, LiOH and Li₂CO₃.

In an exemplary embodiment of the present invention, the y may satisfy 0<y≤3.

In an exemplary embodiment of the present invention, the z may satisfy 0<z≤1.

In an exemplary embodiment of the present invention, the w may satisfy 0.5≤w≤3.

In an exemplary embodiment of the present invention, the v may satisfy 4<v≤12.

The surface layer may be formed by dry-mixing 1) silicon-based particles and aluminum phosphate, 2) silicon-based particles, an aluminum precursor and a phosphorus precursor or 3) silicon-based particles and a Li-Al-P-O-based precursor and heat-treating the mixture, or mixing 1), 2) or 3) with a solvent, and then reacting the mixture while vaporizing the solvent.

In an exemplary embodiment of the present invention, the surface layer may be included in an amount of more than 0 part by weight and 10 parts by weight or less on the basis of 100 parts by weight of the total of the negative electrode active material. Specifically, the surface layer may be included in an amount of 0.1 part by weight or more and 10 parts by weight or less, 0.3 part by weight or more and 8 parts by weight or less, or 0.5 part by weight or more and 5 parts by weight or less. More specifically, the surface layer may be included in an amount of 1 part by weight or more and 3.5 parts by weight or less or 1.5 parts by weight or more and 3 parts by weight or less. If the content of the surface layer is less than the above range, it is difficult to prevent gas generation on the slurry, and if the content is more than the above range, it is difficult to implement the capacity or efficiency.

The upper limit of the content of the surface layer may be 10 parts by weight, 8 parts by weight, 6 parts by weight, 5 parts by weight, 4 parts by weight, 3.5 parts by weight, or 3 parts by weight, and the lower limit thereof may be 0.1 part by weight, 0.3 part by weight, 0.5 part by weight, 0.8 part by weight, 1 part by weight, 1.2 parts by weight, 1.4 parts by weight, or 1.5 parts by weight.

In an exemplary embodiment of the present invention, a weight ratio of the surface layer and the carbon layer may be 1:0.1 to 1:30. Specifically, the weight ratio may be 1:0.5 to 1:5, 1:1 to 1:4, or 1:1 to 1:3. By satisfying the above range, the carbon layer and the surface layer can effectively cover the silicon-based particles, effectively suppressing side reactions on the slurry, and stably implementing capacity and/or efficiency. On the other hand, if the content of the surface layer is excessively higher than that of the carbon layer, it is difficult to implement capacity or efficiency, and if the content of the carbon layer is excessively higher than that of the surface layer, it is difficult to prevent gas generation on the slurry.

In an exemplary embodiment of the present invention, the surface layer may be included in an amount of 90 parts by weight or less on the basis of 100 parts by weight of the carbon layer. Specifically, the surface layer may be included in an amount of 80 parts by weight or less, 70 parts by weight or less, 60 parts by weight or less, or 50 parts by weight or less on the basis of 100 parts by weight of the carbon layer. In addition, the surface layer may be included in an amount of 0.1 part by weight or more, 1 part by weight or more, 5 parts by weight or more, or 10 parts by weight or more on the basis of 100 parts by weight of the carbon layer. By satisfying the above range, the carbon layer and the surface layer can effectively cover the silicon-based particles, effectively suppressing side reactions on the slurry, and stably implementing the capacity and/or efficiency.

In an exemplary embodiment of the present invention, an oxide including one or more selected from the group consisting of Zr, B, Al, Zn, W, and Ti is provided in an interface between the silicon-based particle and the carbon layer.

The oxide including one or more selected from the group consisting of Zr, B, Al, Zn, W and Ti is provided in the interface between the silicon-based particle and the carbon layer as described above, so that the reactivity of silicate, which is highly reactive with water or alkali, can be lowered and contact with the outside can be easily blocked. Additionally, the oxide has low reactivity with the binder component of the slurry, which can further improve aqueous processability.

The oxide may include Zr, and specifically, may be in the form of ZrO₂.

The oxide may include B, and specifically, may be in the form of B₂O₃.

The oxide may include Al, and specifically, may be in the form of Al₂O₃.

The oxide may include Zn, and specifically, may be in the form of ZnO.

The oxide may include W, and specifically, may be in the form of WO₃.

The oxide may include Ti, and specifically, may be in the form of TiO₂.

The oxide may include one or more selected from the group consisting of ZrO₂, B₂O₃, Al₂O₃, ZnO, WO₃ and TiO₂.

The oxide is not limited to the types described above, and oxides known in the art can be appropriately selected and adopted.

The configuration 'the oxide including one or more selected from the group consisting of Zr, B, Al, Zn, W and Ti is provided in the interface between the silicon-based particle and the carbon layer' means that the oxide is provided adjacent on the surface of the silicon-based particle and the carbon layer is provided adjacent on the oxide. That is, the configuration may be such a form that the carbon layer covers the silicon-based particle provided with the oxide on the surface.

In addition, the oxide including one or more selected from the group consisting of Zr, B, Al, Zn, W, and Ti may be additionally provided adjacent on a surface of the silicon-based particle without a carbon layer.

In an exemplary embodiment of the present invention, the oxide may be included in an amount of 0.01 part by weight or more and 0.5 part by weight or less on the basis of 100 parts by weight of the total of the negative electrode active material. Specifically, the oxide may be included in an amount of 0.01 part by weight or more and 0.3 part by weight or less, 0.02 part by weight or more and 0.25 part by weight or less, 0.03 part by weight or more and 0.2 part by weight or less, 0.05 part by weight or more and 0.2 part by weight or less, 0.01 part by weight or more and 0.2 part by weight or less, or 0.07 part by weight or more and 0.16 part by weight or less. When the above content is satisfied, the reactivity of silicate, which is highly reactive with water or alkali, can be effectively lowered, preventing the negative electrode active material from reacting with moisture in the aqueous slurry or lithium by-products from eluting, which has an effect of improving aqueous processability. On the other hand, if the content of the oxide exceeds the above range, the conductivity of the surface of the silicon-based particle decreases, resulting in a problem in which charging and discharging capacity/efficiency is not properly implemented, and if the content of the oxide is less than the above range, the reactivity of silicate near the surface of the silicon-based particle cannot be sufficiently lowered, resulting in a problem in that the effect of improving processability of the aqueous slurry is not sufficiently exhibited.

The lower limit of the content of the oxide may be 0.01 part by weight, 0.02 part by weight, 0.03 part by weight, 0.04 part by weight, 0.05 part by weight, 0.06 part by weight, or 0.07 part by weight, and the upper limit thereof may be 0.5 part by weight, 0.4 part by weight, 0.3 part by weight, 0.25 part by weight, 0.2 part by weight, 0.18 part by weight, 0.15 part by weight, or 0.12 part by weight.

According to the present invention, the one or more selected from the group consisting of Zr, B, Al, Zn, W and Ti included in the oxide is each included in an amount of 0.003 part by weight or more and 0.2 part by weight or less on the basis of 100 parts by weight of the total of the negative electrode active material. Specifically, each of the elements may be included in an amount of 0.003 part by weight or more and 0.18 part by weight or less, 0.004 part by weight or more and 0.17 part by weight or less, 0.005 part by weight or more and 0.16 part by weight or less, 0.01 part by weight or more and 0.15 part by weight or less, 0.03 part by weight or more and 0.15 part by weight or less, or 0.05 part by weight or more and 0.12 part by weight or less. When the above content is satisfied, the reactivity of silicate, which is highly reactive with water or alkali, is lowered, preventing the negative electrode active material from reacting with moisture in the aqueous slurry or lithium by-products from eluting, which has an effect of improving aqueous processability. On the other hand, if the content of each element exceeds the above range, the conductivity of the surface of the silicon-based particle is lowered, so the charging and discharging capacity/efficiency is not properly implemented, and the metal is highly likely to be also present as a simple metal in the interface between the silicon-based particle and the carbon layer, not in the form of metal oxide, and thus, acts as a metal impurity, thereby having a negative effect on the charging and discharging of the battery, causing lithium dendrite to grow inside, and further causing an internal short. If the content of each element is less than the above range, the reactivity of silicate near the surface of the silicon-based particle cannot be sufficiently lowered, resulting in a problem in that the effect of improving processability of the aqueous slurry is not sufficiently exhibited.

In an exemplary embodiment of the present invention, Al included in the oxide may be included in an amount of 0.003 part by weight or more and 0.2 part by weight or less on the basis of 100 parts by weight of the total of the negative electrode active material. Specifically, Al may be included in an amount of 0.003 part by weight or more and 0.18 part by weight or less, 0.004 part by weight or more and 0.17 part by weight or less, 0.005 part by weight or more and 0.16 part by weight or less, 0.01 part by weight or more and 0.15 part by weight or less, 0.03 part by weight or more and 0.15 part by weight or less, or 0.05 part by weight or more and 0.12 part by weight or less. When the above content is satisfied, the reactivity of silicate, which is highly reactive with water or alkali, is lowered, preventing the negative electrode active material from reacting with moisture in the aqueous slurry or lithium by-products from eluting, which has an effect of improving aqueous processability.

The oxide may be included in an amount of 1 part by weight or more and 12 parts by weight or less, specifically, 2 parts by weight or more and 12 parts by weight or less, 2 parts by weight or more and 10 parts by weight or less, 2 parts by weight or more and 8 parts by weight or less, or 3 parts by weight or more and 7 parts by weight or less on the basis of 100 parts by weight of a total of the surface layer. When the above range is satisfied, the reactivity of silicate, which is highly reactive with water or alkali, is lowered, preventing the negative electrode active material from reacting with moisture in the aqueous slurry or lithium by-products from eluting, which has an effect of improving aqueous processability. On the other hand, if the content of the oxide exceeds the above range, the conductivity of the surface of the silicon-based particle is lowered, so the charging and discharging capacity/efficiency is not properly implemented, and the metal is highly likely to be also present as a simple metal in the interface between the silicon-based particle and the carbon layer, not in the form of metal oxide, and thus, acts as a metal impurity, thereby having a negative effect on the charging and discharging of the battery, causing lithium dendrite to grow inside, and further causing an internal short. If the content of the oxide is less than the above range, the reactivity of silicate near the surface of the silicon-based particle cannot be sufficiently lowered, resulting in a problem in that the effect of improving processability of the aqueous slurry is not sufficiently exhibited.

In an exemplary embodiment of the present invention, a lithium by-product may be present on the silicon-based particle. Specifically, the lithium by-product may be present on the surface of the silicon-based particle or on the surface of the carbon layer. In addition, the lithium by-product may be present between the surface layer and the silicon-based particle.

Specifically, the lithium by-product may refer to a lithium compound remaining near the surface of the silicon-based particle or the carbon layer after the silicon-based particle is manufactured. As described above, even after the acid treatment process, lithium by-products unreacted with the acid may remain.

The lithium by-product may include one or more selected from the group consisting of Li₂O, LiOH and Li₂CO₃.

Whether or not the lithium by-product exists can be confirmed through X-ray diffraction analysis (XRD) or X-ray photoelectron analysis (XPS).

The lithium by-product may be included in an amount of 5 parts by weight or less on the basis of on 100 parts by weight of the total of the negative electrode active material. Specifically, the lithium by-product may be included in an amount of 0.01 part by weight to 5 parts by weight, 0.05 part by weight to 2 parts by weight, or 0.1 part by weight to 1 part by weight. More specifically, the lithium by-product may be included in an amount of 0.1 part by weight to 0.8 part by weight or 0.1 part by weight to 0.5 part by weight. When the content of the lithium by-product satisfies the above range, the side reaction in the slurry can be reduced and the change in viscosity can be reduced, thereby improving the aqueous processability characteristics. On the other hand, when the content of the lithium by-product is higher than the above range, the slurry becomes basic when formed, which causes a side reaction or a change in viscosity and problems in the aqueous processability.

The content of the lithium by-product can be calculated by measuring an amount of a HCl solution in a specific section where pH changes in a process of titrating an aqueous solution including the negative electrode active material with the HCl solution using a titrator, and then calculating an amount of the lithium by-product.

An average particle diameter (D50) of the negative electrode active material may be 0.1 µm to 30 µm, specifically 1 µm to 20 µm, and more specifically 1 µm to 10 µm. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

### <Method for Manufacturing Negative Electrode Active Material>

An exemplary embodiment of the present invention provides a method for manufacturing the negative electrode active material including manufacturing a preliminary silicon-based particle including SiOx (0<x<2); mixing the preliminary silicon-based particle and an oxide including one or more selected from the group consisting of Zr, B, Al, Zn, W and Ti, or depositing the oxide on the preliminary silicon-based particle to provide a surface of the preliminary silicon-based particle with the oxide; providing at least a portion of a surface of the preliminary silicon-based particle with a carbon layer; mixing the preliminary silicon-based particle provided with the carbon layer and a Li precursor, and heat-treating the mixture to manufacture a silicon-based particle; and mixing the silicon-based particle and one or more selected from the group consisting of an Al precursor, a P precursor, and a precursor including Al and P to provide at least a portion of a surface of the carbon layer with a surface layer.

The preliminary silicon-based particle may be manufactured by heating Si powder and SiO₂ powder in a vacuum to vaporize the same and then depositing the vaporized mixed gas.

The Si powder and the SiO₂ powder may be included at a weight ratio of 2:8 to 8:2, and specifically, may be included at a weight ratio of 4:6 to 6:4 or 5:5.

Specifically, the mixed powder of the Si powder and SiO₂ powder may be heat-treated at 1300°C to 1800°C, 1400°C to 1800°C or 1400°C to 1600°C under vacuum.

The mixed gas vaporized through the heat treatment can be cooled under vacuum and deposited into a solid phase. Additionally, the preliminary silicon-based particle can be manufactured by heat-treating the deposited solid phase in an inert atmosphere. The heat treatment may be performed at 500°C to 1000°C or 700°C to 900°C.

The formed preliminary silicon-based particle may be present in the form of SiOₓ (x=1).

Thereafter, the preliminary silicon-based particle and an oxide including one or more selected from the group consisting of Zr, B, Al, Zn, W and Ti may be mixed, or the oxide may be deposited on the preliminary silicon-based particle to provide a surface of the preliminary silicon-based particle with the oxide.

The step of providing a surface of the preliminary silicon-based particle with the oxide may further include mixing the oxide and then pulverizing the mixture.

The oxide may be included in an amount of 0.01 part by weight to 0.5 part by weight on the basis of 100 parts by weight of a total of the mixture. Specifically, the oxide may be included in an amount of 0.05 part by weight to 0.3 part by weight, or 0.1 part by weight to 0.2 part by weight.

The pulverizing may be performed using a method such as a ball mill, a jet mill, or an air classification, and is preferably performed through a ball mill process. The pulverizing method is not limited thereto, and pulverizing methods known in the art may be appropriately adopted. Through the pulverizing step, the particle size of the preliminary silicon-based particle can be adjusted, and at the same time, the oxide can be provided on the surface of the preliminary silicon-based particle.

For example, when adjusting the particle size of the preliminary silicon-based particles using a ball mill, 5 to 20 sus ball media can be input, and specifically, 10 to 15 sus ball media can be input, but the present invention is not limited thereto.

In the step of adjusting the particle size, a pulverizing time of the preliminary silicon-based negative electrode active material may be 2 to 5 hours, specifically 2 to 4 hours, and more specifically 3 hours, but is not limited thereto.

In the step of depositing the oxide on the preliminary silicon-based particle to provide the oxide on the surface of the preliminary silicon-based particle, the deposition step may be performed through physical vapor deposition (PVD) using a source including an oxide. The deposition method is not limited thereto, and any deposition method known in the art may be appropriately adopted. Through the deposition step, the oxide can be provided on the surface of the preliminary silicon-based particle.

Thereafter, a carbon layer is provided on the surface of the preliminary silicon-based particle.

The carbon layer may be formed, for example, by using chemical vapor deposition (CVD) in which a carbon-based material, for example, hydrocarbon gas is used or by carbonizing a material serving as a carbon source.

Specifically, the carbon layer may be formed by putting the formed preliminary particle into a reactor, and then depositing hydrocarbon gas at 600°C to 1200°C by chemical vapor deposition (CVD). The hydrocarbon gas may be at least one hydrocarbon gas selected from the group consisting of methane, ethane, propane and acetylene, and may be heat-treated at 900°C to 1000°C.

Thereafter, the preliminary silicon-based particle provided with the carbon layer and a Li precursor is mixed and then heat-treated to produce a silicon-based particle.

The step of mixing the preliminary particle formed with the carbon layer and Li powder and performing heat treatment may be performed at 700°C to 900°C for 4 hours to 6 hours, and specifically at 800°C for 5 hours.

The silicon-based particle formed through the heat treatment includes SiOₓ(0<x<2) and a Li compound.

The silicon-based particle may include, as the Li compound described above, a Li silicate, a Li silicide, a Li oxide, or the like.

The particle size of the silicon-based particle may be further adjusted through a method such as a ball mill, a jet mill, or an air classification, but the present invention is not limited thereto.

A lithium compound (lithium by-product) is provided on at least a portion of the surface of the silicon-based particle having the carbon layer as described above. Specifically, in the processes of forming a preliminary particle including the SiOx (0<x<2), forming a carbon layer on the preliminary particle, and then doping Li to manufacture the silicon-based particle described above, a lithium compound, i.e., a lithium by-product formed due to unreacted lithium remains near the surface of the silicon-based particle.

Thereafter, a surface layer is provided on at least a portion of a surface of the carbon layer.

The step of providing the surface layer on at least a portion of the surface of the carbon layer may include mixing and reacting the silicon-based particle with one or more selected from the group consisting of an Al precursor, a P precursor, and a precursor including Al and P.

In an exemplary embodiment, the step of providing a surface layer on at least a portion of the surface of the carbon layer may include mixing and reacting the silicon-based particle with a precursor including Al and a precursor including P.

The precursor including Al and P may be included in an amount of 0.1 part by weight to 5 parts by weight on the basis of 100 parts by weight of a total of the mixture. Specifically, the precursor may be included in an amount of 0.5 part by weight to 4 parts by weight, or 1 part by weight to 3 parts by weight.

The precursor including Al and P may be aluminum phosphate.

Specifically, the surface layer may be formed on at least a portion of the surface of the carbon layer by 1) dry-mixing the silicon-based particle and aluminum phosphate and heat-treating the mixture, or 2) mixing the silicon-based particle and aluminum phosphate with a solvent, and then reacting the silicon-based particle and aluminum phosphate while vaporizing the solvent through heat treatment. When forming a surface layer using the above method, the surface layer can be easily formed by reacting aluminum phosphate with lithium by-products formed or remaining during the manufacturing process of silicon-based particle.

The aluminum phosphate may be in a form of Al_{b}P_{c}O_{d} (0<b≤10, 0<c≤10, 0<d≤10). Specifically, the aluminum phosphate may be Al(PO₃)₃ or AlPO₄, but is not limited thereto, and salts used in the art may be appropriately adopted to form the surface layer.

In another exemplary embodiment, the step of providing a surface layer on at least a portion of the surface of the carbon layer may include mixing and reacting the silicon-based particle with a precursor including Al (aluminum precursor) and a precursor including P (phosphorus precursor).

Specifically, the surface layer may be formed on at least a portion of the surface of the carbon layer by 3) dry-mixing the silicon-based particle, the aluminum precursor, and the phosphorus precursor and heat treating the mixture, or 4) mixing the silicon-based particle, the aluminum precursor, and the phosphorus precursor with a solvent, and then reacting the silicon-based particle, the aluminum precursor, and the phosphorus precursor while vaporizing the solvent through heat treatment. When forming the surface layer by the above method, the surface layer can be easily formed by reacting the lithium by-products formed during the manufacturing process of silicon-based particle, the aluminum precursor, and the phosphorus precursor.

The aluminum precursor may be aluminum oxide in the form of AlₐO_{b}(0 <a≤10, 0<b≤10), and specifically, may be Al₂O₃.

Alternatively, the aluminum precursor may be aluminum hydroxide, aluminum nitrate, aluminum sulfate, or the like, and specifically, may be Al(OH)₃, Al(NO₃)₃ · 9H₂O or Al₂(S0₄)₃, but is not limited thereto, and an aluminum precursor used in the art may be appropriately adopted to form the surface layer.

The phosphorus precursor may be phosphorous oxide in the form of P_{c}O_{d} (0<c≤10, 0<d≤10).

Alternatively, the phosphorus precursor may be ammonium phosphate, diammonium phosphate, phosphoric acid, or the like, and specifically, may be (NH₄)₃PO₄, (NH₄)₂HPO₄, H₃PO₄ or NH₄H₂PO₄, but is not limited thereto, and a phosphorus precursor used in the art may be appropriately adopted to form the surface layer.

The precursor including Al and P may be a precursor including Li, Al, P, and O (Li-Al-P-O-based precursor).

In another exemplary embodiment, the step of providing a surface layer on at least a portion of the surface of the carbon layer may include mixing and reacting the silicon-based particle with a precursor including Li, Al, P, and O (Li-Al-P-O-based precursor).

Specifically, the surface layer may be formed on at least a portion of the surface of the carbon layer by 5) dry-mixing the silicon-based particle and the Li-Al-P-O-based precursor and heat-treating the mixture, or 6) mixing the silicon-based particle and the Li-Al-P-O-based precursor with a solvent, and then reacting the silicon-based particle and the Li-Al-P-O-based precursor while vaporizing the solvent through heat treatment. When forming the surface layer using the above method, the surface layer can be formed by directly adding the Li-Al-P-O-based precursor.

The Li-Al-P-O-based precursor may be in a form of Li_{y}Al_{z}P_{w}Oᵥ (0<y≤10, 0<z≤10, 0<w≤10, 0<v≤10). Specifically, the Li-Al-P-O-based precursor may be a mixture or compound formed complexly from Li₃PO₄, AlPO₄, Al(PO₃)₃, LiAlO₂ or the like, but is not limited thereto, and a configuration used in the art may be appropriately adopted to form the surface layer.

The precursor may be aluminum phosphate.

In the step of providing a surface layer on at least a portion of the surface of the carbon layer, the heat treatment may be performed at 500°C to 700°C, and specifically 550°C to 650°C. However, the heat treatment is not limited thereto, and may differ depending on the salt or precursor used. When the heat treatment temperature is higher than the above range, the surface layer is formed in a crystalline form, making it difficult for Li ions to enter and exit through the surface layer, thereby reducing resistance and life characteristics and lowering capacity and/or efficiency. When the heat treatment temperature satisfies the above range, the reaction between the salt or precursor and the Li by-product occurs well and the surface layer contains Li, so the durability of the formed negative electrode active material against moisture increases, and a lithium diffusion resistance on the surface of the negative electrode active material is lowered, which has an effect of improving discharge rate capability.

The solvent may be water or ethanol, but is not limited thereto, and a solvent used in the art may be appropriately adopted.

The surface layer formed on at least a portion of the surface of the carbon layer preferably includes a phase of Li_{y}Al_{z}P_{w}Oᵥ (0 <y≤10, 0<z≤10, 0<w≤10, 0<v≤10), and the phase of Li_{y}Al_{z}P_{w}Oᵥ may be an amorphous phase.

Details of the surface layer are the same as described above.

### <Negative Electrode>

A negative electrode according to an exemplary embodiment of the present invention includes the negative electrode active material described above.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder a thickener and/or a conductive material.

The negative electrode active material layer may be formed by applying a negative electrode slurry including a negative electrode active material, a binder, a thickener, and/or a conductive material to at least one surface of a current collector, and drying and roll-pressing the same.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic substance capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as SiO_{β}(0<β<2), SnO₂, vanadium oxide, lithium titanium oxide, and lithium vanadium oxide; or a composite including the metallic compound and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, and specifically 10:90 to 50:50.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

The negative electrode slurry including the negative electrode active material according to an exemplary embodiment of the present invention may have pH of 7 to 11 at 25°C. When pH of the negative electrode slurry satisfies the above range, the rheological properties of the slurry are stabilized. On the other hand, when pH of the negative electrode slurry is less than 7 or pH of the negative electrode slurry exceeds 11, carboxymethylcellulose (CMC) used as a thickener is decomposed, resulting in lowering in viscosity of the slurry and a decrease in dispersion degree of the active material included in the slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the current collector. A thickness of the current collector may be 6 µm to 20 µm. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately adopted.

In an exemplary embodiment of the present invention, a weight ratio of the negative electrode active material and the additional negative electrode active material included in the negative electrode slurry may be 1:99 to 30:70, and specifically 5:95 to 30:70 or 10:90 to 20:80.

In an exemplary embodiment of the present invention, the entire negative electrode active materials included in the negative electrode slurry may be included in an amount of 60 parts by weight to 99 parts by weight, and specifically 70 parts by weight to 98 parts by weight on the basis of 100 parts by weight of a total of solid content of the negative electrode slurry.

In an exemplary embodiment of the present invention, the binder may be included in an amount of 0.5 part by weight to 30 parts by weight, and specifically 1 part by weight to 20 parts by weight, on the basis of 100 parts by weight of the total of the solid content of the negative electrode slurry.

In an exemplary embodiment of the present invention, the conductive material may be included in an amount of 0.5 part by weight to 25 parts by weight, specifically 1 part by weight to 20 parts by weight on the basis of 100 parts by weight of the total of the solid content of the negative electrode slurry.

In an exemplary embodiment of the present invention, the thickener may be included in an amount of 0.5 part by weight to 25 parts by weight, specifically 0.5 part by weight to 20 parts by weight, and more specifically 1 part by weight to 20 parts by weight on the basis of 100 parts by weight of the total of the solid content of the negative electrode slurry.

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a weight of the solid content of the negative electrode slurry may be 20 parts by weight to 75 parts by weight, and specifically 30 parts by weight to 70 parts by weight on the basis of 100 parts by weight of the total of the negative electrode slurry.

### <Secondary battery>

A secondary battery according to an exemplary embodiment of the present invention includes the negative electrode according to an exemplary embodiment of the present invention described above. Specifically, the secondary battery may include a negative electrode, a positive electrode, a separator interposed between the positive electrode and the negative electrode, and an electrolyte solution, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄(0≤c1≤0.33), LiMnO₃, LiMn₂O₃ and LiMnO₂; a lithium copper oxide (Li₂CuO₂); a vanadium oxide such as LiV₃O₈, V₂O₅ and CU₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.5); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidenefluoride (PVDF), vinylidene fluoridehexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution with high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

Another embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

### Best Mode

### <Examples and Comparative Examples>

### Example 1

100g of powder of Si and SiO₂ mixed in a molar ratio of 1:1 was vacuum-heated to a sublimation temperature of 1,400°C in a reactor. Then, a mixed gas of vaporized Si and SiO₂ was reacted in a cooling zone in a vacuum state where a cooling temperature was 800°C, and condensed into a solid phase. Thereafter, heat treatment was performed in an inert atmosphere and at a temperature of 800°Cto prepare preliminary silicon-based particles. Thereafter, the preliminary silicon-based particles and ZrO₂ were added at a weight ratio of 99.9:0.1, and pulverized for 3 hours to prepare silicon-based particles having a size of 6 µm (D₅₀) by using 15 sus ball media added for ball mill. Thereafter, the silicon-based particles were positioned in a hot zone of a CVD apparatus while maintaining the inert atmosphere by causing Ar gas to flow, and a reaction was carried out at 10⁻¹ torr for 20 minutes while blowing methane into the hot zone of 900°C using Ar as a carrier gas, thereby forming a carbon layer on the surface of the silicon-based particles.

10 g of Li metal powder was added to 90 g of the silicon-based particles, which were then subjected to heat treatment in an inert atmosphere and at the temperature of 800°C, resulting in Li-doped silicon-based particles.

98.5 g of the silicon-based particles were mixed with 1.5 g of Al(PO₃)₃, and the mixture was subjected to heat treatment at 600°C to prepare a negative electrode active material including a surface layer including Li, Al, and P and formed on surfaces of the silicon-based particles.

The D₅₀ of the negative electrode active material was 6 µm, and the BET specific surface area was 2.5 m²/g.

The negative electrode active material included ZrO₂ present in the interface between the silicon-based particle and the carbon layer, and as a result of ICP analysis on the negative electrode active material, the contents of Li, Al, P, and Zr were 9.5 wt%, 0.15 wt%, 0.5 wt%, and 0.06 wt%, respectively, based on 100 wt% of a total of the negative electrode active material.

### Example 2

A negative electrode active material was prepared in the same process as in Example 1, except that the preliminary silicon-based particles and ZrO₂ were added at a weight ratio of 99.8:0.2 and then a ball mill was used for the preparation.

The D₅₀ of the negative electrode active material was 6 µm, and the BET specific surface area was 2.5 m²/g.

The negative electrode active material included ZrO₂ present in the interface between the silicon-based particle and the carbon layer, and as a result of ICP analysis on the negative electrode active material, the contents of Li, Al, P, and Zr were 9.5 wt%, 0.15 wt%, 0.5 wt%, and 0.12 wt%, respectively, based on 100 wt% of a total of the negative electrode active material.

### Example 3

A negative electrode active material was prepared in the same process as in Example 1, except that 97.0 g of the silicon-based particles were mixed with 3.0 g of Al(PO₃)₃.

The D₅₀ of the negative electrode active material was 6 µm, and the BET specific surface area was 2.5 m²/g.

The negative electrode active material included ZrO₂ present in the interface between the silicon-based particle and the carbon layer, and as a result of ICP analysis on the negative electrode active material, the contents of Li, Al, P, and Zr were 9.5 wt%, 0.3 wt%, 1.1 wt%, and 0.06 wt%, respectively, based on 100 wt% of a total of the negative electrode active material.

### Example 4

A negative electrode active material was prepared in the same process as in Example 1, except that the preliminary silicon-based particles and B₂O₃ were added at a weight ratio of 99.9:0.1 and then a ball mill was used for the preparation.

The D₅₀ of the negative electrode active material was 6 µm, and the BET specific surface area was 2.5 m²/g.

The negative electrode active material included B₂O₃ present in the interface between the silicon-based particle and the carbon layer, and as a result of ICP analysis on the negative electrode active material, the contents of Li, Al, P, and B were 9.5 wt%, 0.15 wt%, 0.5 wt%, and 0.03 wt%, respectively, based on 100 wt% of a total of the negative electrode active material.

### Example 5

A negative electrode active material was prepared in the same process as in Example 1, except that the preliminary silicon-based particles and Al₂O₃ were added at a weight ratio of 99.9:0.1 and then a ball mill was used for the preparation.

The D₅₀ of the negative electrode active material was 6 µm, and the BET specific surface area was 2.5 m²/g.

The negative electrode active material included Al₂O₃ present in the interface between the silicon-based particle and the carbon layer, and as a result of ICP analysis on the negative electrode active material, the contents of Li, Al, and P were 9.5 wt%, 0.19 wt%, and 0.5 wt%, respectively, based on 100 wt% of a total of the negative electrode active material. (Al content in the interface was 0.04 wt%)

### Example 6

A negative electrode active material was prepared in the same process as in Example 1, except that the preliminary silicon-based particles and ZnO were added at a weight ratio of 99.9:0.1 and then a ball mill was used for the preparation.

The D₅₀ of the negative electrode active material was 6 µm, and the BET specific surface area was 2.5 m²/g.

The negative electrode active material included ZnO present in the interface between the silicon-based particle and the carbon layer, and as a result of ICP analysis on the negative electrode active material, the contents of Li, Al, P, and Zn were 9.5 wt%, 0.15 wt%, 0.5 wt% and 0.07 wt%, respectively, based on 100 wt% of a total of the negative electrode active material.

### Example 7

A negative electrode active material was prepared in the same process as in Example 1, except that the preliminary silicon-based particles and WO₃ were added at a weight ratio of 99.9:0.1 and then a ball mill was used for the preparation.

The D₅₀ of the negative electrode active material was 6 µm, and the BET specific surface area was 2.5 m²/g.

The negative electrode active material included WO₃ present in the interface between the silicon-based particle and the carbon layer, and as a result of ICP analysis on the negative electrode active material, the contents of Li, Al, P, and W were 9.5 wt%, 0.15 wt%, 0.5 wt%, and 0.07 wt%, respectively, based on 100 wt% of a total of the negative electrode active material.

### Example 8

A negative electrode active material was prepared in the same process as in Example 1, except that the preliminary silicon-based particles and TiO₂ were added at a weight ratio of 99.9:0.1 and then a ball mill was used for the preparation.

The D₅₀ of the negative electrode active material was 6 µm, and the BET specific surface area was 2.5 m²/g.

The negative electrode active material included TiO₂ present in the interface between the silicon-based particle and the carbon layer, and as a result of ICP analysis on the negative electrode active material, the contents of Li, Al, P, and Ti were 9.5 wt%, 0.15 wt%, 0.5 wt%, and 0.05 wt%, respectively, based on 100 wt% of a total of the negative electrode active material.

### Comparative Example 1

A negative electrode active material was prepared in the same process as in Example 1, except that the preliminary silicon-based particles and Zr were added at a weight ratio of 99.9:0.1 and then a ball mill was used for the preparation.

The D₅₀ of the negative electrode active material was 6 µm, and the BET specific surface area was 2.5 m²/g.

The negative electrode active material included Zr present in the interface between the silicon-based particles and the carbon layer, and as a result of ICP analysis on the negative electrode active material, the contents of Li, Al, P, and Zr were 9.5 wt%, 0.15 wt%, 0.5 wt% and 0.08 wt%, respectively, based on 100 wt% of a total of the negative electrode active material.

### Comparative Example 2

A negative electrode active material was prepared in the same process as in Example 1, except that only the preliminary silicon-based particles were added (ZrO₂ was not added), silicon-based particles were prepared using a ball mill, and then 98.5 g of Li-doped silicon-based particles were mixed with 1.5 g of Al(PO₃)₃ and 0.1 g of ZrO₂.

The D₅₀ of the negative electrode active material was 6 µm, and the BET specific surface area was 2.5 m²/g.

The negative electrode active material included ZrO₂ in the surface layer, and as a result of ICP analysis on the negative electrode active material, the contents of Li, Al, P, and Zr were 9.5 wt%, 0.15 wt%, 0.5 wt%, and 0.07 wt%, respectively, based on 100 wt% of a total of the negative electrode active material.

### Comparative Example 3

A negative electrode active material was prepared in the same process as in Example 1, except that only the preliminary silicon-based particles were added (ZrO₂ was not added), and then silicon-based particles were prepared using a ball mill.

The D₅₀ of the negative electrode active material was 6 µm, and the BET specific surface area was 2.5 m²/g.

As a result of ICP analysis on the negative electrode active material, the contents of Li, Al, and P were 9.5 wt%, 0.15 wt%, and 0.5 wt%, respectively, based on 100 wt% of a total of the negative electrode active material.

### Comparative Example 4

A negative electrode active material was prepared in the same process as in Example 1, except that a surface layer including Li, Al, and P was not formed by not adding Al(PO₃)₃ to the Li-doped silicon-based particles.

The D₅₀ of the negative electrode active material was 6 µm, and the BET specific surface area was 2.5 m²/g.

The negative electrode active material included ZrO₂ present in the interface between the silicon-based particle and the carbon layer, and as a result of ICP analysis on the negative electrode active material, the contents of Li, Al, P, and Zr were 9.8 wt%, 0.0 wt%, 0.0 wt%, and 0.06 wt%, respectively, based on 100 wt% of a total of the negative electrode active material.

The configurations of the negative electrode active materials prepared in the Examples and the Comparative Examples are shown in Table 1 below.

**[Table 1]**

| | Based on 100 parts by weight of total of negative electrode active material | | | | | | | | | | |
|---|---|---|---|---|---|---|---|---|---|---|---|
| | content of oxide (wt%) | content of carbon layer (wt%) | content of surface layer (wt%) | content of Zr (wt%) | content of B (wt%) | content of Al (wt%) | content of Zn (wt%) | content of W (wt%) | content of Ti (wt%) | content of Li (wt%) | content of P (wt%) |
| Example 1 | 0.081 | 4.4 | 1.5 | 0.06 | - | 0.15 | - | - | - | 9.5 | 0.5 |
| Example 2 | 0.16 | 4.4 | 1.5 | 0.12 | - | 0.15 | - | - | - | 9.5 | 0.5 |
| Example 3 | 0.081 | 4.4 | 3 | 0.06 | - | 0.3 | - | - | - | 9.5 | 1.1 |
| Example 4 | 0.10 | 4.4 | 1.5 | - | 0.03 | 0.15 | - | - | - | 9.5 | 0.5 |
| Example 5 | 0.077 | 4.5 | 1.5 | - | - | 0.19 | - | - | - | 9.5 | 0.5 |
| Example 6 | 0.087 | 4.4 | 1.5 | - | - | 0.15 | 0.07 | - | - | 9.5 | 0.5 |
| Example 7 | 0.088 | 4.3 | 1.5 | - | - | 0.15 | - | 0.07 | - | 9.5 | 0.5 |
| Example 8 | 0.083 | 4.4 | 1.5 | - | - | 0.15 | - | - | 0.05 | 9.5 | 0.5 |
| Comparative Example 1 | - | 4.5 | 1.5 | 0.08 | - | 0.15 | - | - | - | 9.5 | 0.5 |
| Comparative Example 2 | 0.1 | 4.4 | 1.5 | 0.07 | - | 0.15 | - | - | - | 9.5 | 0.5 |
| Comparative Example 3 | - | 4.5 | 1.5 | - | - | 0.15 | - | - | - | 9.5 | 0.5 |
| Comparative Example 4 | 0.86 | 4.5 | - | 0.06 | - | - | - | - | - | 9.8 | - |

The contents of elements were confirmed by ICP analysis using an inductively coupled plasma atomic emission spectrometer (ICP-OES, AVIO 500 of Perkin-Elmer 7300).

The location of the oxide included in the negative electrode active material (interface between silicon-based particle and carbon layer) was analyzed by XPS.

The content of the carbon layer was confirmed under oxygen conditions by an elemental analysis method through combustion (G4 ICARUS of Bruker).

The D₅₀ of the negative electrode active material was analyzed by a PSD measurement method using a Microtrac apparatus.

The specific surface area was measured by degassing gas at 200°C for 8 hours using a BET measuring apparatus (BEL-SORP-MAX, Nippon Bell), and performing N₂ adsorption/desorption at 77 K.

### <Experimental Example: Evaluation of discharge capacity, initial efficiency, and life (capacity retention rate) characteristics>

A negative electrode and a battery were manufactured using the negative electrode active materials of Examples and Comparative Examples, respectively.

A mixture was manufactured by mixing the negative electrode active material, carbon black as a conductive material, and polyacrylic acid (PAA) as a binder in a weight ratio of 80:10:10. Thereafter, 7.8 g of distilled water was added to 5 g of the mixture, which was then stirred to manufacture a negative electrode slurry. The negative electrode slurry was applied to a copper (Cu) metal thin film as a negative electrode current collector having a thickness of 20 µm, and dried. In this case, the temperature of the circulating air was 60°C. Subsequently, the thin film was roll-pressed and dried 130°C for 12 hours in a vacuum oven to prepare a negative electrode.

A lithium (Li) metal thin film obtained by cutting a lithium (Li) metal sheet into a circular shape of 1.7671 cm² was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving LiPF₆ to a concentration of 1M was injected to manufacture a lithium coin half-cell.

The prepared batteries were charged and discharged to evaluate discharge capacity, initial efficiency, and capacity retention rate, which are shown in Table 2 below.

The charging and discharging were performed at 0.1C for the first cycle and the second cycle, and the charging and discharging were performed at 0.5C from the third cycle to the 49th cycle. At the 50th cycle, the charging and discharging were terminated in a charge state (with lithium contained in the negative electrode).
Charging conditions: CC (constant current)/CV (constant voltage) (5mV/0.005C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation. 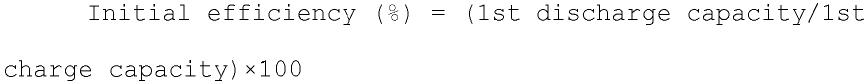 Initial efficiency (%) = (1st discharge capacity/1st charge capacity)×100

The capacity retention rate was derived by the following calculation. 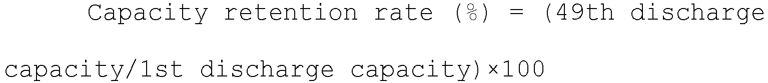 Capacity retention rate (%) = (49th discharge capacity/1st discharge capacity)×100

### <Experimental Example: Evaluation of processability (evaluation of shear viscosity characteristics>

As part of the evaluation of processability, the change in shear viscosity at shear rate (= 1 Hz) of the slurry prepared by mixing graphite, negative electrode active material, carbon black, CMC and SBR at a weight ratio of 77:20:1:1:1 was measured and shown in Table 2 below. Specifically, the change (%) in shear viscosity was derived by the following calculation formula. 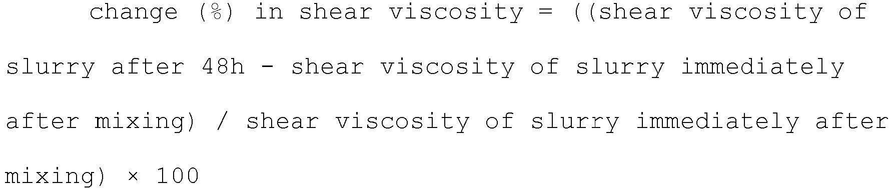 change (%) in shear viscosity = ((shear viscosity of slurry after 48h - shear viscosity of slurry immediately after mixing) / shear viscosity of slurry immediately after mixing) × 100

**[Table 2]**

| Battery | Discharge capacity (mAh/g) | Initial efficiency (%) | Capacity retention rate (%) | Change (%) in shear viscosity |
|---|---|---|---|---|
| Example 1 | 1350 | 91 | 50 | 40 |
| Example 2 | 1340 | 90.5 | 49 | 42 |
| Example 3 | 1340 | 90.5 | 49 | 42 |
| Example 4 | 1350 | 91 | 48 | 43 |
| Example 5 | 1350 | 91 | 48 | 42 |
| Example 6 | 1349 | 91 | 47 | 44 |
| Example 7 | 1350 | 91 | 47 | 44 |
| Example 8 | 1350 | 91 | 48 | 44 |
| Comparative Example 1 | 1260 | 89.5 | 0.5 | 50 |
| Comparative Example 2 | 1350 | 91 | 41 | 50 |
| Comparative Example 3 | 1350 | 91 | 45 | 50 |
| Comparative Example 4 | 1300 | 90 | 30 | 60 |

In Table 2, it could be confirmed that the negative electrode active materials used in Examples 1 to 8 included the oxide in the interface between the silicon-based particle and the carbon layer and the surface layer including Li, Al, and P, so that the reactivity of silicate, which is highly reactive with water or alkali, could be lowered and the contact with the outside could be easily blocked, resulting in improvements in the capacity retention rate and processability of the battery.

On the other hand, it could be confirmed that in Comparative Example 1 in which the negative electrode active material including Zr rather than an oxide was used, Zr acted as a metal impurity, so the discharge capacity, initial efficiency, and processability of the battery were lowered, and in particular, lithium precipitation occurred due to Zr during the cycles of the battery, and accordingly, the capacity retention rate was hardly secured.

It could be confirmed that in Comparative Examples 2 and 3 in which the negative electrode active material including an oxide in the surface layer or not including an oxide was used, it was difficult to lower the reactivity of the silicate in the silicon-based particles, resulting in a side reaction of the slurry, which lowered the capacity retention rate and processability of the battery.

It could be confirmed that in Comparative Example 4 relating to a negative electrode active material without a surface layer, not only the discharge capacity and the initial efficiency were low, but also, in particular, the capacity retention rate and the processability were significantly lowered. In other words, it can be confirmed that, as in Comparative Example 4, even when an oxide such as ZrO₂ is present between the silicon-based particle and the carbon layer, if the surface layer is not included, the capacity retention rate and the processability cannot be improved, and rather, the capacity retention rate and the processability are further lowered, as compared with Comparative Example 3 in which an oxide is not included.

## Claims

1. A negative electrode active material comprising:
a silicon-based particle comprising SiOx (0<x<2) and a Li compound;
a carbon layer provided on at least a portion of a surface of the silicon-based particle; and
a surface layer provided on at least a portion of a surface of the carbon layer and comprising Li, Al and P,
wherein an oxide comprising one or more selected from the group consisting of Zr, B, Al, Zn, W and Ti is provided in an interface between the silicon-based particle and the carbon layer,
wherein the one or more selected from the group consisting of Zr, B, Al, Zn, W, and Ti included in the oxide are included in an amount of 0.003 part by weight or more and 0.2 part by weight or less, respectively, based on 100 parts by weight of a total of the negative electrode active material.

2. The negative electrode active material of claim 1, wherein the oxide comprises one or more selected from the group consisting of ZrO₂, B₂O₃, Al₂O₃, ZnO, WO₃ and TiO₂.

3. The negative electrode active material of claim 1, wherein the oxide is included in an amount of 0.01 part by weight or more and 0.5 part by weight or less on the basis of 100 parts by weight of a total of the negative electrode active material, wherein the content of the oxide is determined as described in the description.

4. The negative electrode active material of claim 1, wherein the surface layer comprises a phase of Li_{y}Al_{z}P_{w}Oᵥ (0<y≤10, 0<z≤10, 0<w≤10, 0<v≤10).

5. The negative electrode active material of claim 1, wherein the surface layer comprises one or more selected from the group consisting of aluminum oxide, phosphorus oxide, lithium oxide, aluminum phosphate, lithium salt, lithium phosphate, and lithium aluminate.

6. The negative electrode active material of claim 1, wherein the surface layer is included in an amount of more than 0 part by weight and 10 parts by weight or less on the basis of 100 parts by weight of a total of the negative electrode active material, wherein the amount of the surface layer is determined as described in the description.

7. The negative electrode active material of claim 1, wherein the Li element is included in an amount of 0.1 part by weight or more and 40 parts by weight or less on the basis of 100 parts by weight of a total of the negative electrode active material, wherein the content of the Li element is determined as described in the description.

8. The negative electrode active material of claim 1, wherein the carbon layer is an amorphous carbon layer.

9. The negative electrode active material of claim 1, wherein the carbon layer is included in an amount of 0.1 part by weight or more and 50 parts by weight or less on the basis of 100 parts by weight of a total of the negative electrode active material.

10. A method for manufacturing the negative electrode active material of any one of claims 1 to 9, the method comprising:
manufacturing a preliminary silicon-based particle comprising SiOx (0<x<2);
mixing the preliminary silicon-based particle and an oxide comprising one or more selected from the group consisting of Zr, B, Al, Zn, W and Ti, or depositing the oxide on the preliminary silicon-based particle to provide a surface of the preliminary silicon-based particle with the oxide;
providing at least a portion of the surface of the preliminary silicon-based particle with a carbon layer;
mixing the preliminary silicon-based particle provided with the carbon layer and a Li precursor, and heat-treating the mixture to manufacture a silicon-based particle; and
mixing the silicon-based particle and one or more selected from the group consisting of an Al precursor, a P precursor, and a precursor comprising Al and P to provide at least a portion of a surface of the carbon layer with a surface layer.

11. The method of claim 10, wherein the providing the oxide on the surface of the preliminary silicon-based particles further comprises a pulverizing process.

12. A negative electrode comprising the negative electrode active material of any one of claims 1 to 9.

13. A secondary battery comprising the negative electrode of claim 12.

## Patentansprüche

1. Negativelektrodenaktivmaterial, umfassend:
ein Partikel auf Siliziumbasis, das SiOx (0 < x < 2) und eine Li-Verbindung umfasst;
eine Kohlenstoffschicht, die auf mindestens einem Teil einer Oberfläche des Partikels auf Siliziumbasis aufgebracht ist; und
eine Oberflächenschicht, die auf mindestens einem Teil einer Oberfläche der Kohlenstoffschicht aufgebracht ist und Li, Al und P umfasst,
wobei ein Oxid, das ein oder mehrere Elemente, ausgewählt aus der Gruppe bestehend aus Zr, B, Al, Zn, W und Ti, umfasst, an einer Grenzfläche zwischen dem Partikel auf Siliziumbasis und der Kohlenstoffschicht vorhanden ist,
wobei das eine oder mehrere in dem Oxid enthaltene und aus der Gruppe bestehend aus Zr, B, Al, Zn, W, und Ti ausgewählte Element in einer Menge von jeweils 0,003 Gewichtsteilen oder mehr und 0,2 Gewichtsteilen oder weniger, bezogen auf 100 Gewichtsteile des gesamten Negativelektrodenaktivmaterials, enthalten sind.

2. Negativelektrodenaktivmaterial gemäß Anspruch 1, wobei das Oxid ein oder mehrere umfasst, ausgewählt aus der Gruppe bestehend aus ZrO₂, B₂O₃, Al₂O₃, ZnO, WO₃ und TiO₂.

3. Negativelektrodenaktivmaterial gemäß Anspruch 1, wobei das Oxid in einer Menge von 0,01 Gewichtsteilen oder mehr und 0,5 Gewichtsteilen oder weniger, bezogen auf 100 Gewichtsteile des gesamten Negativelektrodenaktivmaterials, enthalten ist, wobei der Gehalt des Oxids wie in der Beschreibung angegeben bestimmt wird.

4. Negativelektrodenaktivmaterial gemäß Anspruch 1, wobei die Oberflächenschicht eine Phase aus Li_{y}Al_{z}P_{w}Oᵥ (0 < y ≤ 10, 0 < z ≤ 10, 0 < w ≤ 10, 0 < v ≤ 10) umfasst.

5. Negativelektrodenaktivmaterial gemäß Anspruch 1, wobei die Oberflächenschicht eines oder mehrere umfasst, ausgewählt aus der Gruppe bestehend aus Aluminiumoxid, Phosphoroxid, Lithiumoxid, Aluminiumphosphat, Lithiumsalz, Lithiumphosphat und Lithiumaluminat.

6. Negativelektrodenaktivmaterial gemäß Anspruch 1, wobei die Oberflächenschicht in einer Menge von mehr als 0 Gewichtsteilen und 10 Gewichtsteilen oder weniger, bezogen auf 100 Gewichtsteile des gesamten Negativelektrodenaktivmaterials, enthalten ist, wobei die Menge der Oberflächenschicht wie in der Beschreibung angegeben bestimmt wird.

7. Negativelektrodenaktivmaterial gemäß Anspruch 1, wobei das Li-Element in einer Menge von 0,1 Gewichtsteilen oder mehr und 40 Gewichtsteilen oder weniger, bezogen auf 100 Gewichtsteile des gesamten Negativelektrodenaktivmaterials, enthalten ist, wobei der Gehalt des Li-Elements wie in der Beschreibung angegeben bestimmt wird.

8. Negativelektrodenaktivmaterial gemäß Anspruch 1, wobei die Kohlenstoffschicht eine amorphe Kohlenstoffschicht ist.

9. Negativelektrodenaktivmaterial gemäß Anspruch 1, wobei die Kohlenstoffschicht in einer Menge von 0,1 Gewichtsteilen oder mehr und 50 Gewichtsteilen oder weniger, bezogen auf 100 Gewichtsteile des gesamten Negativelektrodenaktivmaterials, enthalten ist.

10. Verfahren zur Herstellung des Negativelektrodenaktivmaterials gemäß mindestens einem der Ansprüche 1 bis 9, wobei das Verfahren folgendes umfasst:
Herstellen eines Vorläuferpartikels auf Siliziumbasis, das SiOx (0 < x < 2) umfasst;
Mischen des Vorläuferpartikels auf Siliziumbasis mit einem Oxid, das ein oder mehrere Elemente, ausgewählt aus der Gruppe bestehend aus Zr, B, Al, Zn, W und Ti, umfasst, oder das Aufbringen des Oxids auf das Vorläuferpartikel auf Siliziumbasis, um eine Oberfläche des Vorläuferpartikels auf Siliziumbasis mit dem Oxid zu versehen;
Versehen mindestens eines Teils der Oberfläche des Vorläuferpartikels auf Siliziumbasis mit einer Kohlenstoffschicht;
Mischen des mit der Kohlenstoffschicht versehenen Vorläuferpartikels auf Siliziumbasis mit einem Li-Vorläufer und Wärmebehandeln der Mischung, um ein Partikel auf Siliziumbasis herzustellen; und
Mischen des Partikels auf Siliziumbasis mit einem oder mehreren, ausgewählt aus der Gruppe bestehend aus einem Al-Vorläufer, einem P-Vorläufer und einem Vorläufer, der Al und P umfasst, um mindestens einen Teil einer Oberfläche der Kohlenstoffschicht mit einer Oberflächenschicht zu versehen.

11. Verfahren gemäß Anspruch 10, bei dem das Aufbringen des Oxids auf die Oberfläche der Vorläuferpartikel auf Siliziumbasis ferner einen Zerkleinerungsvorgang umfasst.

12. Negative Elektrode, die das Negativelektrodenaktivmaterial gemäß mindestens einem der Ansprüche 1 bis 9 umfasst.

13. Sekundärbatterie, die die negative Elektrode gemäß Anspruch 12 umfasst.

## Revendications

1. Matériau actif d'électrode négative comprenant :
une particule à base de silicium comprenant un SiOx (0 < x < 2) et un composé de Li ;
une couche de carbone fournie sur au moins une portion d'une surface de la particule à base de silicium ; et
une couche de surface fournie sur au moins une portion d'une surface de la couche de carbone et comprenant du Li, de l'Al et du P,
dans lequel un oxyde comprenant un ou plusieurs éléments sélectionnés dans le groupe consistant en Zr, B, Al, Zn, W et Ti est fourni dans une interface entre la particule à base de silicium et la couche de carbone,
dans lequel le un ou les plusieurs éléments sélectionnés dans le groupe consistant en Zr, B, Al, Zn, W et Ti inclus dans l'oxyde sont inclus dans une quantité de 0,003 partie en poids ou plus et 0,2 partie en poids ou moins, respectivement, sur la base de 100 parties en poids d'un total du matériau actif d'électrode négative.

2. Matériau actif d'électrode négative selon la revendication 1, dans lequel l'oxyde comprend un ou plusieurs éléments sélectionnés dans le groupe consistant en ZrO₂, B₂O₃, AI₂O₃, ZnO, WO₃ et TiO₂.

3. Matériau actif d'électrode négative selon la revendication 1, dans lequel l'oxyde est inclus dans une quantité de 0,01 partie en poids ou plus et 0,5 partie en poids ou moins sur la base de 100 parties en poids d'un total du matériau actif d'électrode négative, dans lequel la teneur de l'oxyde est déterminée comme décrit dans la description.

4. Matériau actif d'électrode négative selon la revendication 1, dans lequel la couche de surface comprend une phase de Li_{y}Al_{z}P_{w}Oᵥ (0 < y ≤ 10, 0 < z ≤ 10, 0 < w ≤ 10, 0 < v ≤ 10).

5. Matériau actif d'électrode négative selon la revendication 1, dans lequel la couche de surface comprend un ou plusieurs éléments sélectionnés dans le groupe consistant en oxyde d'aluminium, oxyde de phosphore, oxyde de lithium, phosphate d'aluminium, sel de lithium, phosphate de lithium, et aluminate de lithium.

6. Matériau actif d'électrode négative selon la revendication 1, dans lequel la couche de surface est incluse dans une quantité de plus de 0 partie en poids et 10 parties en poids ou moins sur la base de 100 parties en poids d'un total du matériau actif d'électrode négative, dans lequel la quantité de la couche de surface est déterminée comme décrit dans la description.

7. Matériau actif d'électrode négative selon la revendication 1, dans lequel l'élément Li est inclus dans une quantité de 0,1 partie en poids ou plus et 40 parties en poids ou moins sur la base de 100 parties en poids d'un total du matériau actif d'électrode négative, dans lequel la teneur de l'élément Li est déterminée comme décrit dans la description.

8. Matériau actif d'électrode négative selon la revendication 1, dans lequel la couche de carbone est une couche de carbone amorphe.

9. Matériau actif d'électrode négative selon la revendication 1, dans lequel la couche de carbone est incluse dans une quantité de 0,1 partie en poids ou plus et 50 parties en poids ou moins sur la base de 100 parties en poids d'un total du matériau actif d'électrode négative.

10. Procédé de fabrication du matériau actif d'électrode négative selon l'une quelconque des revendications 1 à 9, le procédé comprenant :
la fabrication d'une particule préliminaire à base de silicium comprenant un SiOx (0 < x < 2) ;
le mélange de la particule préliminaire à base de silicium et d'un oxyde comprenant un ou plusieurs éléments sélectionnés dans le groupe consistant en Zr, B, Al, Zn, W et Ti, ou le dépôt de l'oxyde sur la particule préliminaire à base de silicium pour fournir l'oxyde à une surface de la particule préliminaire à base de silicium ;
la fourniture d'une couche de carbone à au moins une portion de la surface de la particule préliminaire à base de silicium ;
le mélange de la particule préliminaire à base de silicium à laquelle a été fournie la couche de carbone et d'un précurseur de Li, et le traitement thermique du mélange pour fabriquer une particule à base de silicium ; et
le mélange de la particule à base de silicium et d'un ou plusieurs éléments sélectionnés dans le groupe consistant en un précurseur d'Al, un précurseur de P, et un précurseur comprenant de l'Al et du P pour fournir une couche de surface à au moins une portion d'une surface de la couche de carbone.

11. Procédé selon la revendication 10, dans lequel la fourniture de l'oxyde sur la surface des particules préliminaires à base de silicium comprend en outre un processus de pulvérisation.

12. Électrode négative comprenant le matériau actif d'électrode négative selon l'une quelconque des revendications 1 à 9.

13. Batterie secondaire comprenant l'électrode négative selon la revendication 12.
